# EUROPÄISCHE PATENTANMELDUNG

(11) **EP 4 509 481 A1**
(43) Veröffentlichungstag der Anmeldung: **19.02.2025**
(21) Anmeldenummer: 24192200.4
(22) Anmeldetag: 31.07.2024
(51) Int. Cl.: C04B 28/00, C04B 28/04

(54) **AKTIVIERTES BINDEMITTELSYSTEM**

(30) Priorität: 08.08.2023 AT 506352023
(71) Anmelder: ALAS Center of Competence s.r.o., 841 01 Bratislava (SK)
(72) Erfinder: Schinkinger, Thomas, 4072 Alkoven (AT)
(74) Vertreter: Schögl, Daniela

(57) **Zusammenfassung**

Die Erfindung betrifft ein aktiviertes Bindemittelsystem für Baustoffe umfassend zumindest ein Additiv und zumindest einen Aktivator, wobei im aktivierten Bindemittelsystem zumindest ein Erdalkalisulfatträger enthalten ist, sowie die Verwendung des aktivierten Bindemittelsystems, ein Verfahren zur Herstellung eines aktivierten Bindemittelsystems wobei das zumindest eine Additiv, der zumindest eine Erdalkalisulfatträger und zumindest eine Aktivator vermengt werden, und die Bestandteile des aktivierten Bindemittelsystems entweder einzeln oder gemeinsam konditioniert, gebrochen, gesiebt, getrocknet, gemahlen, homogenisiert, und gegebenenfalls nochmals gemischt und/oder gekühlt werden und ein Betonsystem umfassend Wasser, zumindest einen Zuschlagstoff und zumindest ein Bindemittel, wobei das zumindest eine Bindemittel teilweise oder gänzlich durch ein aktiviertes Bindemittelsystem ersetzt ist.

## Beschreibung

Die Erfindung betrifft ein aktiviertes Bindemittelsystem für Baustoffe umfassend ein Additiv und zumindest einen Aktivator, dessen Verwendung und ein Verfahren zu dessen Herstellung sowie ein Betonsystem mit dem aktivierten Bindemittelsystem.

Baustoffe, insbesondere Beton als künstlicher Stein, sind in der Bauindustrie nicht mehr wegzudenken und die Verwendungsmöglichkeiten, insbesondere von Beton, sind vielfältig.

Nichtsdestotrotz gehört die Betonindustrie zu den Hauptverursachern von Treibhausgasen, die die globale Erwärmung bewirken. Die Betonproduktion ist für etwa 6 bis 9 % aller menschengemachten CO₂-Emissionen verantwortlich, was dem Drei- bis Vierfachen der Größenordnung des gesamten Luftverkehrs entspricht. Dies hat zwei Hauptgründe: das Brennen des für die Betonherstellung benötigten Zements ist sehr energieaufwendig, der größere Teil des freigesetzten Kohlendioxids löst sich jedoch während des Brennvorganges, indem CO₂ aus dem Kalkstein gelöst wird. Weltweit werden jährlich 4,1 Milliarden Tonnen Zement hergestellt, der im Mittel etwa 60 % CaO enthält. Damit ergibt sich durch das Freisetzen des im Kalk gebundenen Kohlendioxids selbst bei optimaler Prozessführung ein Ausstoß von mindestens zwei Milliarden Tonnen CO₂ oder 6 % des weltweiten jährlichen CO₂-Ausstoßes.

Um die Emissionen von CO₂ zu reduzieren, wird in Zementzusammensetzungen zunehmend Zement teilweise durch latent-hydraulische und/oder puzzolanische Zusatzstoffe wie z.B. Flugaschen, Hüttensand oder Silicastaub ersetzt, welche als Nebenprodukte in Industrieprozessen anfallen und sich deshalb auf die CO₂ -Bilanz positiv auswirken. Ein Problem, welches sich durch die Verwendung derartiger Zusatzstoffe ergibt, ist, dass das Abbinden dieser Zusatzstoffe deutlich mehr Zeit beansprucht als das Abbinden von hydraulischem Zement mit herkömmlichen Zusatzstoffen, was sich insbesondere nachteilig auf hohe Frühfestigkeiten von Beton auswirkt. Um dieses Problem zu umgehen, können latent-hydraulische und puzzolanische Zusatzstoffe durch Zugabe eines geeigneten Aktivierungsmittels aktiviert werden, beispielsweise durch alkalische Aktivierungsmittel sowie um die CO₂-Emissionen weiter drastisch zu reduzieren ist eine Entwicklung von Alternativen zu hydraulischen Bindemitteln erforderlich. Solche Alternativen können alkalisch aktivierter Bindemittel bzw. Geopolymere (AAB) sein.

Alkalisch-aktivierte Bindemittel (AAB) sind potenzielle Alternativen zu gewöhnlichem Portlandzement (OPC), um die CO₂-Emissionen zu reduzieren und verschiedene Abfallprodukte in nützliche Produkte zu verwandeln. Alkalisch aktivierte Bindemittel (AAB) und Geopolymer-Bindemittel (GP) verzichten vollständig auf Portlandzementklinker, da ein Abbinden der Sekundärstoffe durch die Zugabe einer hochalkalischen Lösung direkt aktiviert werden kann.

Alkalisch aktivierte Bindemittel werden durch die alkalische Aktivierung von Alumosilikatmaterialien wie Flugasche, granulierter Schlacke oder kalzinierten Tonen hergestellt und bei Raumtemperatur oder einer etwas höheren Temperatur ausgehärtet. Die alkalische Aktivierung, die den Lösungsprozess, die Polymerisation und die Kristallisation umfasst, hängt von vielen Parametern ab, darunter die chemische Zusammensetzung, die physikalischen Eigenschaften (z. B. Partikelgrößenverteilung und spezifische Oberfläche der Rohstoffe), die Zusammensetzung der alkalischen Lösung und die Aushärtungstemperatur. Nach dem Massenwirkungsgesetz steigt die Menge der durch die Reaktion gebildeten amorphen Phasen mit zunehmender Konzentration der alkalischen Lösung. Dadurch erhöhen sich auch Festigkeit und Haltbarkeit. Für eine weitere Verbesserung der mechanischen Eigenschaften der AAB können Kurzfasern integriert werden. (Funke, H.L., Gelbrich, S. and Kroll, L. (2016) An Alkali Activated Binder for High Chemical Resistant Self-Leveling Mortar. Open Journal of Composite Materials, 6, 132-142, http://dx.doi.org/10.4236/ojcm.2016.64013).

Es ist ein alkalisch aktiviertes Bindemittel (AAB) bekannt, wobei der Schwerpunkt auf der Leistungsfähigkeit und der Dauerhaftigkeit der AAB-Matrix liegt. Für die Entwicklung der Matrix wurden die reaktiven Komponenten granulierte Hochofenschlacke und Steinkohlenflugasche verwendet, die mit einer Mischung aus Natriumhydroxid (2 - 10 mol/l) und wässriger Natriumsilikatlösung (Molverhältnis SiO2/Na2O: 2,1) bei Raumtemperatur alkalisch aktiviert wurden. Eine Natriumhydroxidkonzentration von 5,5 mol/l ergab den besten Kompromiss zwischen Abbindezeit und mechanischen Festigkeiten der AAB. Bei dieser Natriumhydroxidkonzentration betrugen die Druck- und die 3-Punkt-Biegezugfestigkeit der gehärteten AAB nach 14 Tagen 53,4 bzw. 5,5 MPa. Die Untersuchung der Säurebeständigkeit ergab, dass die AAB-Matrix im Vergleich zu gewöhnlichem Portlandzementbeton eine sehr hohe Säurebeständigkeit aufwies. Darüber hinaus wies die AAB eine hohe Frostbeständigkeit auf, die durch den Kapillarsaug-, den inneren Schädigungs- und den Frost-Tau-Test mit einem relativen dynamischen E-Modul von 93 % und einer Gesamtmenge an verzundertem Material von 30 g/m² nach 28 Frost-Tau-Zyklen (Expositionsklasse: XF3) bestätigt wurde. (Provis, J.L. (2014) Geopolymers and Other Alkali Activated Materials: Why, How, and What? Materials and Structures, 47, 11-25, http://dx.doi.org/10.1617/s11527-013-0211-5).

Sulfatangriff ist eine anerkannte Bedrohung für viele Betonkonstruktionen und tritt häufig in Boden- oder Meeresumgebungen auf. Es hat den Anschein, dass der Prozess des "Sulfatangriffs" auf Geopolymer-Bindemittel stark von dem das Sulfat begleitenden Kation abhängt, und es wird vorgeschlagen, zwischen dem "Magnesiumsulfatangriff" (bei dem sowohl Mg2+ als auch SO4 2- in der Lage sind, Schäden in der Struktur zu verursachen) und allgemeinen Prozessen im Zusammenhang mit dem Vorhandensein von Sulfat in Begleitung anderer, nicht schädigender Kationen zu unterscheiden (Ismail, I., Bernal, S.A., Provis, J.L. et al. Microstructural changes in alkali activated fly ash/slag geopolymers with sulfate exposure. Mater Struct 46, 361-373 (2013), https://doi.org/10.1617/s11527-012-9906-2).

Alkalisch aktivierte Bindemittel, die auch als Geopolymere bezeichnet werden, können durch Mischen einer alkalischen Lösung mit einem reaktiven Alumosilikatpulver, wie Metakaolin oder Flugasche, hergestellt werden und haben sich als wertvolle alternative Bindemittel für die Betonherstellung erwiesen.

Allerdings erfordern die aus dem Stand der Technik bekannten alkalische Aktivierungsverfahren konzentrierte wässrige Alkalilösungen, die korrosiv und zähflüssig sind und daher schwer zu handhaben und nicht benutzerfreundlich sind und somit zu erhöhten Arbeits- und Gesundheitsschutzanforderungen beim Umgang mit alkalischen Aktivatoren führen.

Darüber hinaus sind alkalisch-aktivierte Bindemittel (AAB) und Geopolymer-Bindemittel (GP), welche eine Zugabe von wässrigen Alkalilösungen erfordern, nicht in herkömmlichen Beton-Mischanlagen einsetzbar, weil diese weder über die erforderlichen Fördersysteme noch über spezifisch notwendige Dosiereinrichtungen verfügen.

Aufgabe der vorliegenden Erfindung ist daher ein benutzerfreundliches Bindemittel mit einer günstigen CO₂ Bilanz zur Verfügung zu stellen.

Die Aufgabe der Erfindung wird jeweils eigenständig durch ein aktiviertes Bindemittelsystem für Baustoffe, ein aktiviertes Bindemittelsystem zur Verwendung bei der Herstellung von Baustoffen sowie einem Verfahren zur Herstellung des aktivierten Bindemittelsystems gelöst, wobei das aktivierte Bindemittelsystem zumindest ein Additiv, zumindest einen Aktivator und zumindest einen Erdalkalisulfatträger, insbesondere zumindest einen Calciumsulfatträger, umfasst.

Erfindungsgemäßes aktiviertes Bindemittelsystem bietet neben ökonomischen sowie ökologischen auch technische Vorteile gegenüber herkömmlichen Bindemitteln. Das erfindungsgemäße aktivierte Bindemittelsystem härtet im Vergleich zu Zementen mit Bestandteilen von Flugaschen, Hüttensand oder Silicastaub sehr schnell aus und erhöht dadurch die Frühfestigkeit von beispielsweise Beton und/oder Mörtel und somit wird die Frühfestigkeit der damit hergestellten Bauteile und Bauwerke erhöht. Dadurch wird auch die Herstellung von Fertigbauteilen in annehmbaren Zeiträumen ermöglicht.

Auch der Einfluss der erfindungsgemäß aktivierten Bindemittelsysteme auf die Dauerhaftigkeitseigenschaften, wie z.B. Frost- und Frost-Taumittel-Widerstand von Beton, ist positiv.

Es erweist sich als vorteilhaft als Additiv zumindest einen puzzolanischen und/oder latent-hydraulischen Zusatzstoff mit erhöhter Reaktivität zu verwenden, weil die Reaktionsfähigkeit von Materialien mit nur geringen puzzolanischen oder latent-hydraulischen Eigenschaften erhöht wird. Der Aktivator dient vornehmlich zur Anregung des puzzolanischen Zusatzstoffes und der Erdalkalisulfatträger dient hauptsächlich der Aktivierung und des latent-hydraulischen Zusatzstoffes, wobei jeweils positive Effekte in Bezug auf die Frühfestigkeit von Beton erreicht werden können.

Zudem wird dadurch die CO₂-Bilanz des Betons verbessert, weil erhöhte Anteile des aktivierten Bindemittelsystems in der Herstellung des Betons verwendet werden können. Diese CO₂-armen Bindemittelsystem weist vergleichbare mechanische Eigenschaften auf wie herkömmliche Portlandzementbetone, wobei im Allgemeinen eine gute Dauerhaftigkeit in der Anwendung festgestellt wird. Die Aktivierung der Mischungen aus puzzolanischen oder latent-hydraulischen Zusatzstoffen und Erdalkalisulfatträgern, erzielt aber auch die Erhöhung der Frühfestigkeiten der daraus hergestellten Betone und Mörtel.

Außerdem bleibt die Verarbeitbarkeit des aktivierten Bindemittelsystems in herkömmlichen Produktionsprozessen, wie beispielsweise der Ortbeton-Prozessketten, vollständig gewahrt.

Das puzzolanische Additiv ist vorzugsweise ausgewählt aus einer Gruppe umfassend Asche, Ziegel, Perlit, Zeolith, calcinierte Tone, Glas, Tuffe, Tuffite, und/oder Trass oder eine Mischung daraus. In der Natur vorkommende Mineralien bzw. Abfallstoffe der Industrie, die nicht eigens erzeugt werden müssen, dienen weiters die CO₂ Bilanz des aktivierten Bindemittelsystems zu verbessern.

Das latent-hydraulische Additiv ist vorteilhafterweise ausgewählt aus einer Gruppe umfassend Baurestmassen und Schlacken oder eine Mischung daraus, weil dadurch ebenfalls bereits vorhandene Materialien verwendet werden, die keinen weiteren CO₂-Fußabdruck hinterlassen.

Als Schlacke ist Hochofenschlacke, Stahlwerkschlacke und/oder Metallhüttenschlacken, enthalten, wodurch resourcenschonend vorgegangen wird und die Verwendung von natürlichen Rohstoffen vermieden wird und dadurch massive Eingriffe in die Landschaft vermieden werden können.

Vorzugsweise ist als Stahlwerkschlacke Konverterschlacke und/oder Elektroofenschlacke enthalten, wodurch bei der Verwendung für die Herstellung von Beton das Betongefüge dichter wird und die Porosität von Beton vermindert ist.

Der zumindest eine Aktivator ist ausgewählt aus einer Gruppe umfassend alkalische Aktivatoren, Massengrundstoffe, Zement und/oder Zementklinker, nicht alkalische Aktivatoren, fein vermahlene Materialien oder eine Mischungen daraus, wodurch die erforderlichen Parameter für das aktivierte Bindemittelsystem eingestellt und optimiert werden können. Betone auf Basis von alkalisch aktivierten Bindemitteln zeigen eine verbesserte Hochtemperaturbeständigkeit, eine geringere Permeabilität, höhere Festigkeiten und verbesserte Dauerhaftigkeitseigenschaften, v.a. einen erhöhten Widerstand gegen aggressive Medien, beispielsweise gegen organische Säuren oder Sulfate.

Vorzugsweise ist der zumindest eine Aktivator ein alkalischer Aktivator ausgewählt aus einer Gruppe umfassend Natriumhydroxid, Natriummetasilicat, Natriumcarbonat, Natriumaluminat, Kaliumcarbonat, Kaliumsulfat, Natriumsulfat, Kaliumhydroxid, Calciumoxid, Calciumhydroxid, Magnesiumoxid, Alkalisilikate oder eine Mischungen daraus wodurch die Aktivierung und Polymerisierung des Additivs des aktivierten Bindemittelsystems besonders effizient erfolgt. In einer bevorzugten Ausführungsform ist der zumindest eine alkalische Aktivator in einer Menge von kleiner 15 Masse%, vorzugsweise in einem Bereich von 0,1 Masse% bis 10 Masse%, insbesondere von 0,5 Masse% bis 5 Masse% enthalten.

Alternativ ist der zumindest eine Aktivator ein Massengrundstoff ausgewählt aus einer Gruppe umfassend Rotschlamm, Glas, insbesondere Glasscherben, Maisstängelasche, Maiskolbenasche oder eine Mischung daraus, womit für die Aktivierung natürliche Rochstoffe bzw. Abfälle verwendet werden und für die Bereitstellung des Aktivators kein zusätzlicher CO₂-Fußabdruck hinterlassen wird.

Als weitere Alternative ist der zumindest eine Aktivator ein nicht alkalischer Aktivator ist ausgewählt aus einer Gruppe umfassend Phosphorsäure, Aluminium Ätzlösungen, Bayer-Lösungen aus der Aluminiumherstellung, Aluminiummetaphosphate, Natriumphosphate, Natriumtrimetaphosphat-Hydrate, Natriumpolyphosphate, Natriumhydrogenphosphat, Sodalith, Natriumhexafluorosilikat, Tetramethylsilan, Kaliumpyrophosphat, Alkalihexafluorosilikate oder eine Mischung daraus, wobei bei besonderen Anforderungen an den Baustoff auch Säuren zur Aktivierung verwendet werden können.

Vorzugsweise ist das fein vermahlene Material ausgewählt aus einer Gruppe umfassend oder bestehend aus Kalkstein, Dolomit, Karbonate, Silikate, Aluminiumoxid (Al₂O₃), Vaterit oder eine Mischung daraus wodurch keine weiteren Kalzinierungsprozesse unter Freisetzung von CO₂ notwendig sind und eine gute Vermengbarkeit gegeben ist.

Vorteilhafterweise ist der zumindest eine Aktivator in einem festen Aggregatszustand enthalten, wodurch der Aktivator einfach zu handhaben ist.

Der zumindest eine Erdalkalisulfatträger, insbesondere der zumindest eine Calciumsulfatträger, ist ausgewählt aus einer Gruppe umfassend Anhydrit, Bassanit und/oder Gips oder eine Mischung daraus. Durch das Hinzufügen des Erdalkalisulfatträgers wird erreicht, dass der Hydratisierungsprozess und somit die Aushärtung stark beschleunigt wird, wodurch die Frühfestigkeit signifikant erhöht wird.

Das aktivierte Bindemittelsystem weist einen pH-Wert von > 7 auf, weil dadurch die Aktivierung und die Polymerisierung am effektivsten abläuft und die Frühfestigkeit von Beton und/oder Mörtel verbessert wird.

Von Vorteil erweist sich, dass das aktivierte Bindemittelsystem als Fertigmischung vorliegt, weil dadurch die Benutzerfreundlichkeit steigt und das aktivierte Bindemittel analog zu Portlandzement eingesetzt werden kann.

In einer bevorzugten Ausführungsform weist das aktivierte Bindemittelsystem zumindest 40 Masse% bis 98 Masse% zumindest eines Additivs, 1 Masse% bis etwa 60 Masse% zumindest eines Erdalkalisulfatträgers und 0,1 Masse% bis etwa 15 Masse% zumindest eines Aktivators, insbesondere alkalisch aktivierten Aktivators, auf, wodurch neben der Frühfestigkeit des Betons und/oder Mörtels auch die Säure- und Laugenbeständigkeit steigt.

Vorzugsweise wird das aktivierte Bindemittelsystem zur Verwendung bei der Herstellung von Baustoffen eingesetzt, wobei das aktivierte Bindemittelsystem aus einer Mischung umfassend 40 Masse% bis 98 Masse% zumindest eines Additivs, 1 Masse% bis etwa 60 Masse% zumindest eines Erdalkalisulfatträgers und 0, 1 Masse% bis etwa 15 Masse% zumindest eines Aktivators, insbesondere alkalisch aktivierten Aktivators, gebildet ist, wobei Festigkeiten, die jene von Standardportlandzementen übersteigen, erzielt werden können. Weiterhin härten diese Systeme sehr schnell aus und weisen eine sehr hohe Chemikalienresistenz und Temperaturbeständigkeit auf.

Dabei eignet sich das erfindungsgemäße aktivierte Bindemittelsystem besonders auch für die Herstellung von Rohren, Schächten und ist für die Errichtung von landwirtschaftlichen Bauten attraktiv.

Darüber hinaus kann ein hoher Widerstand gegenüber hohen Temperaturen und Wärmeschock festgestellt werden. Somit eignet sich das Bindemittel auch für die Herstellung energetisch optimierter Wärmespeicher und hochtemperaturbeständiger Bauteile.

Beim Verfahren zur Herstellung des aktivierten Bindemittelsystems wird zumindest ein Additiv, zumindest ein Erdalkalisulfatträger und zumindest ein Aktivator vermengt, wobei die Bestandteile des aktivierten Bindemittelsystems konditioniert, gebrochen, gesiebt, getrocknet, gemahlen, homogenisiert, und gegebenenfalls nochmals gemischt und/oder gekühlt werden, wodurch vielseitige Anwendungsmöglichkeiten für das aktivierte Bindemittelsystem geschaffen werden. Eine Verwendung des erfindungsgemäßen aktivierten Bindemittelsystems zur Herstellung entsprechender Betone ist ohne investiven Aufwand in nahezu jeder Betonmischanlage möglich.

Das Betonsystem umfasst zumindest Wasser, zumindest einen Zuschlagstoff und zumindest ein Bindemittel, wobei das zumindest eine Bindemittel teilweise oder gänzlich durch ein aktiviertes Bindemittelsystem ersetzt ist. Somit kann auf vorteilhafte Weise erreicht werden, dass die Herstellung des Betonsystems einfach und bedienungsfreundlich erfolgen kann.

Durch das erfindungsgemäße aktivierte Bindemittelsystem, die Verwendung des erfindungsgemäßen aktivierten Bindemittelsystems zur Herstellung von Baustoffen, dem Verfahren zur Herstellung des aktivierten Bindemittelsystems sowie dem Betonsystem enthaltend das aktivierte Bindemittelsystem wird ein erheblicher Beitrag zur Reduktion der Treibhausgasemissionen in der Baustoffindustrie geleistet.

Die Erfindung beschreibt aktiviertes Bindemittelsystem für Baustoffe umfassend zumindest ein Additiv, insbesondere aktvierbares Additiv, zumindest einen Aktivator und einen Erdalkalisulfatträger, sowie dessen Verwendung und Verfahren zu dessen Herstellung sowie ein Betonsystem mit dem aktivierten Bindemittelsystem.

Die Aktivierung aus Mischungen zumindest eines Additivs und zumindest eines Erdalkalisulfatträgers erzielt die Erhöhung der Frühfestigkeiten der der mit diesen Materialien hergestellten Betone und Mörtel.

Die vorliegende Erfindung ermöglicht, dass durch ein erfindungsgemäß zusammengesetztes, insbesondere alkalisch, aktiviertes Bindemittelsystem Betoneigenschaften erreicht werden können, die mit konventionellem Beton bisher nicht erreicht werden konnten. Im Vordergrund stehen dabei der chemische Widerstand gegenüber Säuren und Laugen sowie die Frühfestigkeit von Beton.

Für die Beurteilung der Festigkeit des Betons ist im Allgemeinen die 28-Tage-Druckfestigkeit maßgebend. In einigen Fällen kann auch die sogenannte Frühfestigkeit im Alter von einigen Stunden oder Tagen maßgeblich sein, zum Beispiel für die Festlegung des Termins zum Ausschalen bzw. zum Aufbringen früher Belastungen (Spannbeton).

Die Frühfestigkeit von Beton lässt sich durch folgende Maßnahmen steigern (i) Wahl einer Betonzusammensetzung mit einem schnell erhärtenden Zement, niedrigem Wasser zu Bindemittel Verhältnis und/oder entsprechenden Betonzusatzmitteln, (ii) Erhöhung der Frischbetontemperatur, (iii) Wärmebehandlung des verdichteten Betons und (iv) Aktivierung der Betoninhaltsstoffe mit dem erfindungsgemäßen aktivierten Bindemittelsystem. Diese Maßnahmen lassen sich auch teilweise miteinander kombinieren.

Alkalische Aktivierung ist der Oberbegriff für die Reaktion eines festen Alumosilikats (als Vorläufer bzw. Presursor bezeichnet) unter alkalischen Bedingungen (ausgelöst durch den Alkalischen Aktivator), um ein gehärtetes Material zu erzeugen, das auf einer Kombination von wasserhaltigen Alkalialumosilikat- und/oder Erdalkalialumosilikat-Phasen basiert. Mit einem Aktivator unter nicht alkalischen Bedingungen kann ebenfalls eine Aktivierung der Ausgangsstoffe erfolgen, um ein gehärtetes Material herzustellen.

Die alkalische Aktivierung führt zu einer Hydratationsbeschleunigung von puzzolanischen oder latent-hydraulischen Zusatzstoffen. Dabei bilden sich neben den hydraulischen Bindephasen (CSH-Phasen und CAH-Phasen) zwei- bis dreidimensionale, amorphe Netzwerke, sowie gemeinsam mit dem Erdalkalisulfatträger Sulfat-Hydrat-Phasen, welche einen erheblichen Beitrag zum frühen Festigkeitsgewinn von Beton und Mörtel leisten.

Der Mechanismus der Netzwerkbildung ist von einer Vielzahl von Faktoren abhängig, wie beispielsweise der chemischen Zusammensetzung und der Konzentration der Aktivatoren, der Zusammensetzung und den Eigenschaften der korrespondierenden, anzuregenden Additive, dem Wasser zu Bindemittel Verhältnis, welches zur Ausbildung unterschiedlicher Phasen und amorphen Netzwerken führt, aber auch der Temperatur der Reaktion sowie Faktoren der Nachbehandlung der hergestellten Bauteile und Bauwerke.

Die Herausforderung der zielführenden alkalischen Aktivierung besteht somit aus der exakten Abstimmung der Reaktionspartner bestehend aus Additiven, insbesondere puzzolanischen oder latent-hydraulischen Zusatzstoffen, den adäquaten Erdalkalisulfatträgern, und den entsprechenden Aktivatoren in geeigneten Konzentrationen.

Alkalisch aktivierte Bindemittel (AAB) werden im Allgemeinen calciumreiche Systeme mit einem hohen Gehalt an Silicium (als SiO₂) und Aluminium (als Al₂O₃) definiert, bei deren Reaktion Mischphasen sowohl aus alumosilikatischen Polymernetzwerken als auch aus Hydratphasen beispielsweise CSH- oder CAH-Phasen gebildet werden. Bei höheren Calcium-Gehalten (z.B. bei Hüttensanden) spricht man von Alkalisch-aktivierten Bindemitteln (AAB), bei deren Reaktion sich auch CSH-Phasen bilden.

Alkalisch aktivierte Bindemittel, werden oft auch als "Geopolymere" bezeichnet. Sie können aus einer breiten Palette von Aluminosilikat-Precursoren hergestellt werden, die sich in Bezug auf Verfügbarkeit, Reaktivität, Kosten und Wert weltweit unterscheiden.

Im Rahmen der Erfindung werden die Bezeichnung aktivierte Bindemittel sowohl für calciumarme als auch für calciumreiche Bindemittel verwendet.

Als Additiv wird vorzugsweise ein puzzolanischer und/oder latent-hydraulischer Zusatzstoff für das aktivierte Bindemittelsystem verwendet. Die Erfindung umfasst somit die Aktivierung, insbesondere alkalische Aktivierung, von Mischungen aus puzzolanischen und latent-hydraulischen Zusatzstoffen und Erdalkalisulfatträgern.

Das für die Herstellung des aktivierten Bindemittelsystems verwendete puzzolanische Additiv ist vorzugsweise aus einer Gruppe umfassend oder bestehend aus Asche, Ziegel, Perlit, Zeolith, calcinierte Tone, Glas, Tuffe, Tuffite, und/oder Trass oder eine Mischung daraus ausgewählt.

Das latent-hydraulische Additiv ist vorteilhafterweise aus einer Gruppe umfassend oder bestehend aus Baurestmassen und Schlacken oder eine Mischung daraus ausgewählt.

In einer Ausführungsform können im aktivierten Bindemittelsystem sowohl zumindest ein oder mehrere puzzolanische Additive als auch zumindest ein oder mehrere latent-hydraulische Additive enthalten sein.

Als latent-hydraulisches Additiv können Hochofenschlacke, Stahlwerkschlacke und/oder Metallhüttenschlacken, im aktivierten Bindemittelsystem enthalten sein, wobei vorzugsweise Konverterschlacke, die bei der Erzeugung von Rohstahl nach dem Linz-Donawitz-Verfahren anfällt, und/oder Elektroofenschlacke enthalten ist. Durch den Einsatz von Industrieabfällen werden natürliche Ressourcen geschont. Zudem werden der Kreislaufwirtschaft in der Baustoffindustrie neue Wege eröffnet.

Der zumindest eine Aktivator, der im aktivierten Bindemittelsystem enthalten ist, ist vorzugsweise aus einer Gruppe umfassend oder bestehend aus alkalische Aktivatoren, Massengrundstoffe, Zement und/oder Zementklinker, nicht alkalische Aktivatoren, fein vermahlene Materialien oder einer Mischungen daraus ausgewählt.

In einer bevorzugten Ausführungsform ist der zumindest eine Aktivator zumindest ein alkalischer Aktivator, vorzugsweise der aus einer Gruppe umfassend oder bestehend aus Natriumhydroxid, Natriummetasilicat, Natriumcarbonat, Natriumaluminat, Kaliumcarbonat, Kaliumsulfat, Natriumsulfat, Kaliumhydroxid, Calciumoxid, Calciumhydroxid, Magnesiumoxid, Alkalisilikate oder eine Mischungen ausgewählt ist. In einer bevorzugten Ausführungsform ist der zumindest eine alkalische Aktivator in einer Menge von kleiner 15 Masse%, vorzugsweise in einem Bereich von 0,1 Masse% bis 10 Masse%, insbesondere von 0,5 Masse% bis 5 Masse%, im aktivierten Bindemittelsystem enthalten.

Im Gegensatz zum hydraulischen Erstarren von Zementen sind bei alkalisch aktivierten Bindemittelsystemen silizium- und aluminiumreiche, leicht lösliche Ausgangskomponenten erforderlich. Die Erstarrungsreaktion gliedert sich in drei Hauptphasen. Durch die Zugabe eines alkalischen Aktivators werden die Feststoffkomponenten aus dem Ausgangsstoff zuerst gelöst, was die Bildung und Oligomerisierung von Silicium-Sauerstoff-Aluminaten (Sialaten) ermöglicht und anschließen durch Umordnung und Kondensation polymerisiert, sodass sich schlussendlich ein dreidimensionales alumosilikatisches Polymernetzwerk bildet, was zum Erhärten des Bindemittels führt.

In einer möglichen Ausführungsform kann hybrid aktiviertes Bindemittelsystem neben alkalisch aktiviertem Bindemittelsystem auch Zementklinker zur Aktivierung enthalten.

Als alternativer Aktivator oder zusätzlich zum alkalischen Aktivator kann zumindest eine Massengrundstoff vorteilhafterweise aus einer Gruppe umfassend oder bestehend aus Rotschlamm, Glas, insbesondere Glasscherben, Maisstängelasche, Maiskolbenasche oder eine Mischung daraus ausgewählt sein, wodurch ebenfalls eine alkalische Aktivierung des Bindemittels erfolgt.

Die Erfindung betrifft auch Mischungen von alkalischen Aktivatoren mit zumindest einem puzzolanischen oder latent-hydraulischen Zusatzstoff und zumindest einem Erdalkalisulfatträger, welche ohne oder gemeinsam mit herkömmlichen Zementen zur Herstellung von Betonen oder Mörteln Verwendung finden, sowie deren Verwendung und ein Verfahren zu deren Herstellung.

In einer alternativen Ausführungsform kann die Aktivierung auch mit zumindest einem nicht alkalischen Aktivator vorzugsweise ausgewählt aus einer Gruppe umfassend oder bestehend aus Phosphorsäure, Aluminium Ätzlösungen, Bayer-Lösungen aus der Aluminiumherstellung, Aluminiummetaphosphate, Natriumphosphate, Natriumtrimetaphosphat-Hydrate, Natriumpolyphosphate, Natriumhydrogenphosphat, Sodalith, Natriumhexafluorosilikat, Tetramethylsilan, Kaliumpyrophosphat, Alkalihexafluorosilikate oder eine Mischung daraus erfolgen.

Des Weiteren kann auch ein fein vermahlenes Material vorteilhafterweise ausgewählt aus einer Gruppe umfassend oder bestehend aus Kalkstein, Dolomit, Karbonate, Silikate, Aluminiumoxid (Al₂O₃), Vaterit oder eine Mischung daraus dem aktivierten Bindemittelsystem beigemengt sein.

Das fein vermahlene Material kann in Kombination mit einem alkalischen oder nicht alkalischen Aktivator und/oder Massengrundstoff im aktivierten Bindemittelsystem enthalten sein.

Vorzugsweise liegen die Komponenten des aktivierten Bindemittelsystems in festem Aggregatszustand vor und werden vermengt und gelagert und erst bei tatsächlichem Gebrauch wird durch Zugabe von Wasser oder einer Lösung die Aktivierung gestartet.

Ferner ist neben dem Additiv und Aktivator auch zumindest ein Erdalkalisulfatträger vorzugsweise ausgewählt aus einer Gruppe umfassend oder bestehend aus Anhydrit, Bassanit und/oder Gips oder eine Mischung daraus enthalten. Durch den Erdalkalisulfatträger ergibt sich eine bevorzugte Zusammensetzung des aktivierten Bindemittelsystems, welche eine beschleunigte Hydratation bewirkt.

Der pH-Wert des aktivierten Bindemittelsystems beträgt >7, wodurch die Aktivierung des Bindemittels rasch und zuverlässig erfolgt.

In einer bevorzugten Ausführungsform liegt das aktivierte Bindemittelsystem als Fertigmischung vorliegt, weil dadurch eine bessere Verarbeitbarkeit ermöglicht wird.

Das aktivierte Bindemittelsystem kann daher als Einkomponentenmischung vorliegen, wobei nur durch Wasser hinzufügen ein für den Baustoff verwendbares Bindemittel zur Verfügung steht. Eine solche Einkomponentenmischungen hat ein größeres Potenzial als das herkömmliche zweikomponentige alkalisch aktivierte Bindemittel, vor allem bei der Anwendung in herkömmlichen Betontechnologien, beispielsweise zur Herstellung von Ortbeton.

Einkomponentiges aktiviertes Bindemittelsystem umfasst eine Trockenmischung, die aus einem festen Additiv, einem festen Aktivator und einer festen Sulfatquelle besteht, dem Wasser zugesetzt wird, ähnlich wie bei der Verwendung von Portlandzement. Die Trockenmischung kann bei erhöhten Temperaturen hergestellt werden, um die Reaktivität bestimmter Rohstoffe zu fördern.

Das aktivierte Bindemittelsystem umfasst 40 Masse% bis 98 Masse% zumindest eines Additivs, 1 Masse% bis etwa 60 Masse% zumindest eines Erdalkalisulfatträgers und 0,1 Masse% bis etwa 15 Masse% zumindest eines Aktivators, insbesondere alkalisch aktivierten Aktivators. Dadurch können die Abbindeeigenschaften an die jeweiligen Anforderungen exakt angepasst werden.

Das aktivierte Bindemittelsystem wird bei der Herstellung von Baustoffen verwendet, wobei das aktivierte Bindemittelsystem aus einer Mischung umfassend 40 Masse% bis 98 Masse% zumindest eines Additivs, 1 Masse% bis etwa 60 Masse% zumindest eines Erdalkalisulfatträgers und 0,1 Masse% bis etwa 15 Masse% zumindest eines Aktivators, insbesondere alkalisch aktivierten Aktivators, gebildet wird.

Das aktivierte Bindemittelsystem wird zur Herstellung von Baustoffen, wie Beton, insbesondere von Ortbeton oder Betonfertigteilen, Mörteln und Fugenmörteln, Estrichen, Betonsteinen, sowie von, Schüttmaterial und/oder Tragschichten verwendet. Besonders gut eignet sich das erfindungsgemäße aktivierte Bindemittelsystem zur Herstellung von Beton. Auch eine Verwendung des aktivierten Bindemittelsystems als Baustoff in Form von Fußboden-, Wand-, und Dachelementen, Schüttmaterialien und von Tragschichten für den Straßen- und Wegebau ist möglich.

Beim Verfahren zur Herstellung des aktivierten Bindemittelsystems wird zumindest ein Additiv, zumindest ein Erdalkalisulfatträger und zumindest ein Aktivator vermengt, wobei die Bestandteile des aktivierten Bindemittelsystems konditioniert, gebrochen, gesiebt, getrocknet, gemahlen, homogenisiert, und gegebenenfalls nochmals gemischt und/oder gekühlt werden.

Bei der Herstellung des aktivierten Bindemittelsystems können alle Bestandteile zu jedem Prozessschritt miteinander in Verbindung gebracht werden. Dabei können alle Bestandteile einzeln konditioniert, zerkleinert, gegebenenfalls homogenisiert, gesiebt, getrocknet und gemahlen und danach vermengt werden oder auch zu einem früheren Prozessschritt, beispielsweise nach der Trocknung oder der Zerkleinerung, miteinander vermengt werden. Bei einer möglichen Ausführungsvariante des Herstellungsverfahrens des aktivierten Bindemittelsystems können die einzelnen Bestandteile einzeln gebrochen werden und einzeln getrocknet werden und anschließend gemeinsam gemahlen werden.

Die Erfindung betrifft auch die alkalische Aktivierung von Mischungen aus puzzolanischen oder latent-hydraulischen Zusatzstoffen und Erdalkalisulfatträgern, welche gemeinsam mit herkömmlichen Zementen zur Herstellung von Betonen oder Mörteln Verwendung finden.

Das erfindungsgemäße aktivierte Bindemittelsystem kann den Zement bei der Herstellung des Betons ersetzen oder zumindest die Menge des Zements bzw. Zementklinkers verringern, wodurch Klimaschäden, die durch die Zementherstellung entstehen, reduziert werden können.

Das aktivierte Bindemittelsystem kann dabei mit Zement vermengt werden, um ein hybrides Bindemittel für die Bauindustrie zu bilden. Hierbei können beispielsweise 30 Masse% bis 50 Masse% des Zements durch das erfindungsgemäße aktivierte Bindemittelsystem ersetzt werden, um ein Bindemittel für die Herstellung von Beton zur Verfügung zu stellen. Das erfindungsgemäße aktivierte Bindemittelsystem kann bei der Vermengung mit Zement, gemeinsam mit dem Zementklinker vermahlen werden, nach der Vermahlung im trockenen Zustand mit ebenfalls gemahlenem Zement gemischt werden, im Zuge der Betonherstellung mit dem Zement vermengt werden oder auf eine andere Art mit dem Zement in Verbindung gebracht werden.

In einem Betonsystem umfassend Wasser, zumindest einen Zuschlagstoff und zumindest ein Bindemittel kann das zumindest eine Bindemittel teilweise oder gänzlich durch das erfindungsgemäße aktivierte Bindemittelsystem ersetzt werden.

### Beispiele

Im nachfolgenden sind mögliche Mischungen des erfindungsgemäßen aktivierten Bindemittelsystems aufgelistet.

Die Tabellen 1 bis 11 beinhalten erfindungsgemäße Mischungen für die Festigkeitsbestimmung gemäß EN 196-1:2016 Prüfverfahren für Zement - Teil 1: Bestimmung der Festigkeit; welche alle gemeinsam mit Zement (CEM I; CEM II A-S 42,5 R; CEM II B-S 42,5 N) durchgeführt wurden. In Mischung 1 ist daher der pure Zement (CEM I) verwendet, welcher definitionsgemäß immer 100 % Aktivität in Bezug auf die Festigkeit von Beton am Tag 1, 2, 7 und 28 aufweist.

Jeweils die erste Mischung der Tabellen 1 bis 11 beinhaltet die Referenz zu den einzelnen Messreihen. Sie besteht immer aus 75 Masse% Zement und 25 Masse% Additiv (Konverterschlacke und Tuff), beinhaltet jedoch keine Aktivatoren.

Die aktivierten Bindemittelsysteme beinhalten immer 100 Masse%, z.B. 75 Masse% CEM I, 12 Masse% Konverterschlacke, 12 Masse% Tuff und 1 Masse% Aktivator.

Tabelle 1, 2 und 5 bis 11 zeigen aktivierte Bindemittelsysteme mit CEM I. Tabelle 3 beinhaltet als Zement CEM II B-S 42,5 N und Tabelle 4 beinhaltet als Zement CEM II A-S 42,5 R.

Tabelle 1 zeigt Mischungen eines nicht erfindungsgemäßen aktivierten Bindemittelsystems, wobei die Mischung zumindest ein puzzolnanisch und/oder latent-hydraulisches Additiv und einen Aktivator enthält, aber keinen Sulfatträger.

**Tabelle 1**

| | **Zement (Masse %)** | **Additiv (Masse %)** | | **Aktivator(en) (Masse %)** |
|---|---|---|---|---|
| **Aktiviertes Bindemittelsystem** | **CEMI** | **Konverterschlacke** | **Tuff** | |
| Mischung 1 | 100 | 0 | 0 | |
| Mischung 2 | 75 | 12,5 | 12,5 | |
| Mischung 3 | 75 | 11,875 | 11,875 | |
| Mischung 4 | 75 | 11,875 | 11,875 | Kaliumsulfat 1,25 |
| Mischung 5 | 75 | 11,875 | 11,875 | Kaliumcarbonat 1,25 |
| Mischung 6 | 75 | 11,875 | 11,875 | Rotschlamm 1,25 |
| Mischung 7 | 75 | 11,875 | 11,875 | Glasabfall 1,25 |
| Mischung 8 | 75 | 11,875 | 11,875 | Glasscherben 1,25 |
| Mischung 9 | 75 | 10 | 10 | Rotschlamm 5 |
| Mischung 10 | 75 | 10 | 10 | Glasabfall 5 |
| Mischung 11 | 75 | 10 | 10 | Glasscherben 5 |

Die Mischungen des aktivierten Bindemittelsystems der Tabellen 2 bis 4 beinhalten ein puzzolnanisch und/oder latent-hydraulisches Additiv, einen Aktivator sowie Anhydrit als Calciumsulfatträger.

**Tabelle 2**

| | **Zement (Masse%)** | **Additiv (Masse %)** | | **Sulfatträger (Masse%)** | **Aktivator(en) (Masse %)** |
|---|---|---|---|---|---|
| **Aktiviertes Bindemittelsystem** | **CEMI** | **Konverterschlacke** | **Tuff** | | |
| Mischung 12 | 75 | 12,5 | 12,5 | | |
| Mischung 13 | 75 | 11,25 | 11,25 | Anhydrit 1,5 | Hydrasiertes Natriumdisilikat Mol-Ratio (Na₂O/SiO₂) 2,61-2,70 |
| | | | | | 1 |
| Mischung 14 | 75 | 11,25 | 11,25 | Anhydrit 1,5 | Natriumsilikat, MVZ > 1,6 ≤ 2,6 |
| | | | | | 1 |
| Mischung 15 | 75 | 11,25 | 11,25 | Anhydrit 1,5 | Natriumsilikat, MVZ > 3,2 |
| | | | | | 1 |
| Mischung 16 | 75 | 11,25 | 11,25 | Anhydrit 1,5 | Natriumsilikat, SiO2 60 % zu Na2O 20 % |
| | | | | | 1 |
| Mischung 17 | 75 | 11,25 | 11,25 | Anhydrit 1,5 | Natrium Metasilicat anhydrisch gekörnt |
| | | | | | 1 |

**Tabelle 3**

| | **Zement (Masse %)** | **Additiv (Masse %)** | | **Sulfatträger (Masse %)** | **Aktivator(en) (Masse %)** |
|---|---|---|---|---|---|
| **Aktiviertes Bindemittelsystem** | **CEM II B-S 42,5 N** | **Konverterschlacke** | **Tuff** | | |
| Mischung 18 | 75 | 12,5 | 12,5 | | |
| Mischung 19 | 75 | 11,25 | 11,25 | Anhydrit 1,5 | Hydrasiertes Natriumdisilikat Mol-Ratio (Na₂O/SiO₂) |
| | | | | | 2,61-2,70 |
| | | | | | 1 |
| Mischung 20 | 75 | 11,25 | 11,25 | Anhydrit 1,5 | Natriumsilikat, MVZ > 1,6 ≤ 2,6 |
| | | | | | 1 |
| Mischung 21 | 75 | 11,25 | 11,25 | Anhydrit 1,5 | Natriumsilikat, MVZ > 3,2 |
| | | | | | 1 |
| Mischung 22 | 75 | 11,25 | 11,25 | Anhydrit 1,5 | Natriumsilikat, SiO2 60 % zu Na2O 20 % |
| | | | | | 1 |
| Mischung 23 | 75 | 11,25 | 11,25 | Anhydrit 1,5 | Natrium Metasilicat anhydrisch gekörnt |
| | | | | | 1 |

**Tabelle 4**

| | **Zement (Masse %)** | **Additiv (Masse %)** | | **Sulfatträger (Masse %)** | **Aktivator(en) (Masse %)** |
|---|---|---|---|---|---|
| **Aktiviertes Bindemittelsystem** | **CEM II A-S 42,5 R** | **Konverterschlacke** | **Tuff** | | |
| Mischung 24 | 75 | 12,5 | 12,5 | | |
| Mischung 25 | 75 | 11,25 | 11,25 | Anhydrit 1,5 | Hydrasiertes Natriumdisilikat Mol-Ratio (Na₂O/SiO₂) 2,61-2,70 |
| | | | | | 1 |
| Mischung 26 | 75 | 11,25 | 11,25 | Anhydrit 1,5 | Natriumsilikat, MVZ > 1,6 ≤ 2,6 |
| | | | | | 1 |
| Mischung 27 | 75 | 11,25 | 11,25 | Anhydrit 1,5 | Natriumsilikat, MVZ > 3,2 |
| | | | | | 1 |
| Mischung 28 | 75 | 11,25 | 11,25 | Anhydrit 1,5 | Natriumsilikat, SiO2 60 % zu Na2O 20 % |
| | | | | | 1 |
| Mischung 29 | 75 | 11,25 | 11,25 | Anhydrit 1,5 | Natrium Metasilicat anhydrisch gekörnt |
| | | | | | 1 |

Die Mischungen 30 bis 39 des aktivierten Bindemittelsystems der Tabelle 5 beinhalten ein puzzolanisch und/oder latent-hydraulisches Additiv und teilweise einen Aktivator oder einen Erdalkalisulfatträger.

**Tabelle 5**

| | **Zement (Masse%)** | **Additiv (Masse %)** | | **Sulfatträger (Masse%)** | **Aktivator(en) (Masse %)** |
|---|---|---|---|---|---|
| **Aktiviertes Bindemittelsystem** | **CEMI** | **Konverterschlacke** | **Tuff** | | |
| Mischung 30 | 75 | 0 | 25 | | |
| Mischung 31 | 75 | 0 | 23,75 | | Natriumhydroxid |
| | | | | | 1,25 |
| Mischung 32 | 75 | 0 | 23,75 | | Kaliumhydroxid |
| | | | | | 1,25 |
| Mischung 33 | 75 | 0 | 23,75 | | Natriumcarbonat |
| | | | | | 1,25 |
| Mischung 34 | 75 | 0 | 23,75 | | Calciumhydroxid |
| | | | | | 1,25 |
| Mischung 35 | 75 | 0 | 23,75 | | Calciumoxid |
| | | | | | 1,25 |
| Mischung 36 | 75 | 0 | 23,75 | | Magnesiumoxid |
| | | | | | 1,25 |
| Mischung 37 | 75 | 0 | 23,75 | | Natriumaluminat |
| | | | | | 1,25 |
| Mischung 38 | 75 | 0 | 23,75 | | Natriummetasilicat |
| | | | | | 1,25 |
| Mischung 39 | 75 | 0 | 23,75 | Anhydrit 1,25 | |

Die Mischungen 40 bis 48 des aktivierten Bindemittelsystems der Tabelle 6 beinhalten ein puzzolanisch und/oder latent-hydraulisches Additiv, teilweise einen Aktivator und/oder teilweise einen Erdalkalisulfatträger.

**Tabelle 6**

| | **Zement (Masse %)** | **Additiv (Masse %)** | | **Sulfatträger (Masse %)** | **Aktivator(en) (Masse %)** |
|---|---|---|---|---|---|
| **Aktiviertes Bindemittelsystem** | **CEM I** | **Konverterschlacke** | **Tuff** | | |
| Mischung 40 | 75 | 12,5 | 12,5 | | |
| Mischung 41 | 75 | 12,25 | 12,25 | | Natriummetasilicat |
| | | | | | 0,5 |
| Mischung 42 | 75 | 12 | 12 | | Natriummetasilicat |
| | | | | | 1 |
| Mischung 43 | 75 | 12 | 12 | Bassanit | Natriummetasilicat |
| | | | | 0,5 | 0,5 |
| Mischung 44 | 75 | 12,25 | 12,25 | Bassanit | |
| | | | | 0,5 | |
| Mischung 45 | 75 | 12 | 12 | Bassanit | |
| | | | | 1 | |
| Mischung 46 | 75 | 12,125 | 12,125 | Anhydrit | |
| | | | | 0,75 | |
| Mischung 47 | 75 | 12,125 | 12,125 | Stuckgips | |
| | | | | 0,75 | |
| Mischung 48 | 75 | 12,125 | 12,125 | Gips | |
| | | | | 0,75 | |

Die Mischungen 49 bis 59 des aktivierten Bindemittelsystems den Tabellen 7 und 8 beinhalten ein puzzolanisch und/oder latent-hydraulisches Additiv, einen Aktivator aber keinen Sulfatträger.

**Tabelle 7**

| | **Zement (Masse %)** | **Additiv (Masse %)** | | **Aktivator(en) (Masse %)** |
|---|---|---|---|---|
| **Aktiviertes Bindemittelsystem** | **CEM I** | **Konverterschlacke** | **Tuff** | |
| Mischung 49 | 75 | 12,5 | 12,5 | |
| Mischung 50 | 75 | 12,125 | 12,125 | Natrium Metasilicat anhydrisch granular |
| | | | | 0,75 |
| Mischung 51 | 75 | 12,125 | 12,125 | Natrium Metasilicat Pentahydrat Medium Granular |
| | | | | 0,75 |
| Mischung 52 | 75 | 12,125 | 12,125 | Natriumsilikat, MVZ > 3,2 |
| | | | | 0,75 |
| | | | | |
| Mischung 53 | 75 | 12,125 | 12,125 | Natriumsilikat, MVZ > 1,6 ≤ 2,6 |
| | | | | 0,75 |

**Tabelle 8**

| | **Zement (Masse %)** | **Additiv (Masse %)** | | **Aktivator(en) (Masse %)** |
|---|---|---|---|---|
| **Aktiviertes Bindemittelsystem** | **CEM I** | **Konverterschlacke** | **Tuff** | |
| Mischung 54 | 75 | 12,5 | 12,5 | |
| Mischung 55 | 75 | 12,125 | 12,125 | Natriumsilikat, SiO₂ zu Na₂O: 2,65 |
| | | | | 0,75 |
| Mischung 56 | 75 | 12,125 | 12,125 | Natriumsilikat, SiO₂ 60 % zu Na₂O 20 % |
| | | | | 0,75 |
| Mischung 57 | 75 | 12,125 | 12,125 | Natriumdisilikat silicate powder Mol-Ratio (Na₂O / SiO₂) |
| | | | | 2,05 |
| | | | | 0,75 |
| Mischung 58 | 75 | 12,125 | 12,125 | Hydrasiertes Natriumdisilikat Mol-Ratio (Na₂O / SiO₂) |
| | | | | 2,61-2,70 |
| | | | | 0,75 |
| Mischung 59 | 75 | 12,125 | 12,125 | Natriumdisilikat silicate powder Mol-Ratio (Na₂O / SiO₂) |
| | | | | 3,35 |
| | | | | 0,75 |

Die Mischungen 60 bis 63 des aktivierten Bindemittelsystems der Tabelle 9 beinhalten ein puzzolanisch und/oder latent-hydraulisches Additiv, teilweisen einen Aktivator und einen Erdalkalisulfatträger.

**Tabelle 9**

| | **Zement (Masse %)** | **Additiv (Masse %)** | | **Sulfatträger (Masse %)** | **Aktivator(en) (Masse %)** |
|---|---|---|---|---|---|
| **Aktiviertes Bindemittelsystem** | **CEMI** | **Konverterschlacke** | **Tuff** | | |
| Mischung 60 | 75 | 12,5 | 12,5 | | |
| Mischung 61 | 75 | 11,25 | 11,25 | Anhydrit 1,5 | Natriummetasilicat 1 |
| Mischung 62 | 75 | 11,5 | 11,5 | Anhydrit 1,5 | Natriummetasilicat 0,5 |
| Mischung 63 | 75 | 11,75 | 11,75 | Anhydrit 1,5 | |

Die Mischungen 64 bis 77 des aktivierten Bindemittelsystems den Tabellen 10 und 11 beinhalten ein puzzolanisch und/oder latent-hydraulisches Additiv, einen oder mehrere Aktivatoren oder einen Erdalkalisulfatträger.

**Tabelle 10**

| | **Zement (Masse%)** | **Additiv (Masse %)** | | **Sulfatträger (Masse%)** | **Aktivator(en) (Masse %)** |
|---|---|---|---|---|---|
| **Aktiviertes Bindemittelsystem** | **CEMI** | **Konverterschlacke** | **Tuff** | | |
| Mischung 64 | 75 | 12,5 | 12,5 | | |
| Mischung 65 | 75 | 12,0625 | 12,0625 | | Natriumhydroxid 0,875 |
| Mischung 66 | 75 | 12,0625 | 12,0625 | | Kaliumhydroxid 0,875 |
| Mischung 67 | 75 | 12,0625 | 12,0625 | | Natriumcarbonat 0,875 |
| Mischung 68 | 75 | 12,0625 | 12,0625 | | Calciumhydroxid 0,875 |
| Mischung 69 | 75 | 12,0625 | 12,0625 | | Calciumoxid 0,875 |
| Mischung 70 | 75 | 12,0625 | 12,0625 | | Magnesiumoxid 0,875 |
| Mischung 71 | 75 | 12,0625 | 12,0625 | | Natriumaluminat 0,875 |
| Mischung 72 | 75 | 12,0625 | 12,0625 | | Natriummetasilicat 0,875 |
| Mischung 73 | 75 | 12,0625 | 12,0625 | Bassanit 0,875 | |

**Tabelle 11**

| | **Zement (%)** | **Additiv (%)** | | **Aktivator(en) (%)** | |
|---|---|---|---|---|---|
| **Aktiviertes Bindemittelsystem** | **CEM I** | **Konverterschlacke** | **Tuff** | | |
| Mischung 74 | 75 | 12,5 | 12,5 | | |
| Mischung 75 | 75 | 12,125 | 12,125 | Natriumcarbonat 0,4 | Natriumaluminat 0,35 |
| Mischung 76 | 75 | 12,125 | 12,125 | | Natriumaluminat 0,75 |
| Mischung 77 | 75 | 12,125 | 12,125 | Natriumcarbonat 0,75 | |

Tabelle 12 zeigt die Aktivität der Mischungen 1 bis 77 in Bezug auf die Festigkeitsbestimmung gemäß EN 196-1:2016; Prüfverfahren für Zement - Teil 1: Bestimmung der Festigkeit; unter Verwendung des erfindungsgemäßen aktivierten Bindemittelsystems am Tag 1, 2, 7 und 28.

**Tabelle 12**

| | **Aktivität in %** | | | |
|---|---|---|---|---|
| **Aktiviertes Bindemittelsystem** | **1** | **2** | **7** | **28** |
| Mischung 1 | 100 | 100 | 100 | 100 |
| Mischung 2 | 61 | 64 | 72 | NA |
| Mischung 3 | 78 | 77 | 72 | 76 |
| Mischung 4 | 70 | 74 | 68 | 74 |
| Mischung 5 | 64 | 70 | 69 | 74 |
| Mischung 6 | 63 | 69 | 73 | NA |
| Mischung 7 | 57 | 63 | 73 | NA |
| Mischung 8 | 61 | 67 | 72 | 82 |
| Mischung 9 | 61 | 70 | 74 | NA |
| Mischung 10 | 63 | 65 | 72 | NA |
| Mischung 11 | 67 | 71 | 71 | NA |
| Mischung 12 | 56 | 69 | 77 | 84 |
| Mischung 13 | 75 | 76 | 78 | 83 |
| Mischung 14 | 73 | 75 | 77 | 81 |
| Mischung 15 | 73 | 74 | 78 | 86 |
| Mischung 16 | 61 | 72 | 76 | 82 |
| Mischung 17 | 75 | 80 | 72 | 74 |
| Mischung 18 | 64 | 58 | 68 | 81 |
| Mischung 19 | 71 | 66 | 69 | 77 |
| Mischung 20 | 86 | 72 | 71 | 78 |
| Mischung 21 | 68 | 65 | 69 | 77 |
| Mischung 22 | 65 | 67 | 69 | 79 |
| Mischung 23 | 92 | 76 | 72 | 74 |
| Mischung 24 | 49 | 52 | 71 | 84 |
| Mischung 25 | 85 | 73 | 72 | 80 |
| Mischung 26 | 89 | 76 | 76 | 84 |
| Mischung 27 | 73 | 69 | 73 | 81 |
| Mischung 28 | 73 | 71 | 75 | 86 |
| Mischung 29 | 85 | 76 | 71 | 75 |
| Mischung 30 | 56 | 64 | 75 | 80 |
| Mischung 31 | 66 | 63 | 47 | 57 |
| Mischung 32 | 70 | 73 | 64 | 65 |
| Mischung 33 | 77 | 73 | 65 | 69 |
| Mischung 34 | 60 | 68 | 76 | 68 |
| Mischung 35 | 61 | 69 | 80 | 82 |
| Mischung 36 | 60 | 69 | 77 | 81 |
| Mischung 37 | 6 | 29 | 70 | 78 |
| Mischung 38 | 82 | 77 | 70 | 74 |
| Mischung 39 | 69 | 73 | 80 | 85 |
| Mischung 40 | 50 | 65 | 80 | 91 |
| Mischung 41 | 64 | 74 | 81 | 86 |
| Mischung 42 | 71 | 80 | 77 | 83 |
| Mischung 43 | 65 | 81 | 82 | 87 |
| Mischung 44 | 58 | 69 | 81 | 90 |
| Mischung 45 | 62 | 73 | 82 | 91 |
| Mischung 46 | 59 | 71 | 82 | 89 |
| Mischung 47 | 59 | 71 | 83 | 88 |
| Mischung 48 | 58 | 69 | 75 | 83 |
| Mischung 49 | 55,4 | 66,4 | 78,2 | NA |
| Mischung 50 | 65 | 72 | 73 | NA |
| Mischung 51 | 56 | 69 | 74 | NA |
| Mischung 52 | 59 | 71 | 79 | NA |
| Mischung 53 | 64 | 74 | 77 | NA |
| Mischung 54 | 55,4 | 66,4 | 78,2 | NA |
| Mischung 55 | 56 | 69 | 75 | NA |
| Mischung 56 | 60 | 70 | 79 | NA |
| Mischung 57 | 62 | 71 | 76 | NA |
| Mischung 58 | 69 | 76 | 77 | NA |
| Mischung 59 | 57 | 69 | 78 | NA |
| Mischung 60 | 60,9 | 67 | 78,8 | NA |
| Mischung 61 | 80 | 77 | 75 | NA |
| Mischung 62 | 74 | 75 | 78 | NA |
| Mischung 63 | 68 | 72 | 80 | NA |
| Mischung 64 | 40 | 56,3 | 81,6 | NA |
| Mischung 65 | 45,5 | 65,5 | 73,5 | NA |
| Mischung 66 | 42,9 | 62,6 | 77,1 | NA |
| Mischung 67 | 51 | 63,8 | 72,4 | NA |
| Mischung 68 | 45 | 62,2 | 80,8 | NA |
| Mischung 69 | 41,8 | 59,3 | 83,6 | NA |
| Mischung 70 | 40,8 | 58,9 | 79,9 | NA |
| Mischung 71 | 2,9 | 27,7 | 75,7 | NA |
| Mischung 72 | 67,6 | 77,2 | 80,7 | NA |
| Mischung 73 | 54 | 66,6 | 84,5 | NA |
| Mischung 74 | 23,1 | 47,9 | 83,7 | 93,3 |
| Mischung 75 | 34,4 | 56,4 | 74,3 | 83,7 |
| Mischung 76 | 2,2 | 3,9 | 73 | 85,7 |
| Mischung 77 | 38,9 | 57,3 | 70,9 | 73,9 |

Ab einer Aktivitätssteigerung von 20 % am Tag 1 zu den jeweiligen Referenzmischungen sind die jeweiligen Mischungen besonders geeignet für eine Steigerung der Frühfestigkeit und der Verkürzung der Zeit bis zum Ausschalen.

Ab einer Aktivitätssteigerung von 15 % am Tag 2 zu den jeweiligen Referenzmischungen sind die jeweiligen Mischungen besonders geeignet für eine Verkürzung der Zeit zum Aufbringen früher Belastungen (Spannbeton).

Eine Aktivität am Tag 7, welche jener der Referenzmischung entspricht, ist als bevorzugt zu betrachten, und zeigt, dass die Prozesse zur Steigerung der Frühfestigkeiten bei 1 und 2 Tagen keinen negativen Einfluss auf den weiteren Verlauf der Festigkeitszunahmen haben.

Schlussendlich sind moderate Verringerungen der Aktivitäten bei Tag 28 akzeptabel, da eine Aktivierung und die Steigerung der Frühfestigkeit zumeist mit einer geringfügigen Minimierung der Endfestigkeit einhergehen.

Als besonders geeignet zur Steigerung der Frühfestigkeit haben sich Mischungen aus Erdalkalisulfatträgern, insbesondere Anhydrit und Natriumsilikaten, insbesondere Natriummetasilicate oder Natriumsilikate, MVZ > 3,2 gezeigt.

Hervorzuheben ist die Aktivität von Mischung 23, welche bei den 1d Werten nahezu die Festigkeiten der reinen Zementmischung erzielt.

Die Ergebnisse der weiteren Mischungen zeigen, dass eine bevorzugte Formulierung der Mischungen einen optimierten Aktivitätsverlauf mit zunehmendem Testalter erzielen, welche eine Steigerung der Frühfestigkeiten sowie einen akzeptablen, weiteren Festigkeitsverlauf miteinander vereinen.

Dabei ist zu bemerken, dass die Kombination mehrerer Aktivatorfamilien, insbesondere Erdalkalisulfatträger und alkalische Aktivatoren, ausgesprochen bevorzugenswerte Ergebnisse erzielen.

Durch die exakte Abstimmung der chemischen Zusammensetzungen des aktivierten Bindemittelsystems können sowohl die puzzolanisch anregbaren Bestandteile (beispielsweise Asche, Ziegel, Perlit, Zeolith, calcinierte Tone, Glas, Tuffe, Tuffite, und/oder Trass oder eine Mischung daraus) sowie die latent-hydraulisch wirksamen Anteile (beispielsweise Baurestmassen und Schlacken oder eine Mischung daraus) entsprechend aktiviert werden.

Bei den verwendeten puzzolanischen Tuffen lassen sich vornehmlich die kieselsäurehaltigen oder kieselsäure- und tonerdehaltigen Anteile (hauptsächlich der aus Siliciumdioxid, Aluminiumoxid (Tonerde) und Alkalien bestehenden Glasanteil) durch die Zugabe von zumindest einem Aktivator, insbesondere ausgewählt aus einer Gruppe umfassend alkalische Aktivatoren, Massengrundstoffe, sowie nicht alkalische Aktivatoren, aktivieren.

Die verwendeten Tuffe können dabei stellvertretend für die weiteren puzzolanisch aktivierbaren Materialien (beispielsweise Asche, Ziegel, Perlit, Zeolith, calcinierte Tone, Glas, Tuffe, Tuffite, und/oder Trass oder eine Mischung daraus) herangezogen werden, da diese ebenfalls als aktivierbare Bestandteile vornehmlich kieselsäure- und tonerdehaltigen Anteile, bzw. hauptsächlich aus Siliciumdioxid, Aluminiumoxid (Tonerde) und Alkalien bestehende Glasanteile besitzen.

Die verwendeten Schlacken, welche hauptsächlich latent-hydraulische Anteile besitzen welche entsprechend aktivierbar sind, werden wiederum durch die exakte Dosierung der Erdalkalisulfatträger in ihrem Beitrag zur Bildung von festigkeitsbilden Phasen gefördert.

Die verwendeten Schlacken wiederum können dabei stellvertretend für die weiteren latent-hydraulischen Materialien (beispielsweise Baurestmassen und Schlacken oder eine Mischung daraus) herangezogen werden, da diese ebenfalls als aktivierbare Bestandteile hauptsächlich Calciumoxid (CaO), Siliciumdioxid (SiO₂) und Aluminiumoxid (Al₂O₃) und Magnesiumoxid (MgO), teilweise als freie Mineralphasen oder deren Verbindungen (Calciumsilicat- und Aluminat-Phasen), aufweisen.

Somit zeigen die angeführten Mischungen, dass durch die abgestimmte Dosierung von zumindest einem Additiv, zumindest einem Aktivator und zumindest einem Erdalkalisulfatträger, aktivierte Bindemittelsysteme erzielbar sind, welche stark gesteigerte Festigkeitsentwicklungen gegenüber den Referenzen ohne Aktivatoren und Erdalkalisulfatträgern aufweisen.

Insgesamt decken daher die erfindungsgemäßen Beispiele der Mischungen, die gesamte Palette der angeführten Additive (puzzolanisch aktivierbaren Materialien wie Asche, Ziegel, Perlit, Zeolith, calcinierte Tone, Glas, Tuffe, Tuffite, Trass, sowie latent-hydraulischen Materialien wie Baurestmassen und Schlacken, oder Mischungen daraus) sowie der angeführten Erdalkalisulfatträger (Anhydrit, Bassanit, Gips) sowie die Funktionsweisen (Aktivierung der Additive zur Ausbildung von dreidimensionales alumosilikatisches Polymernetzwerken) der angeführten Aktivatoren (alkalische Aktivatoren, Massengrundstoffe, Zement und/oder Zementklinker, nicht alkalische Aktivatoren) und der fein vermahlenen Materialien, ab.

Erfindungsgemäße Beispiele sind die Mischungen 13-17, 19-23, 25-29, 43, 61 und 62. Bei diesen Beispielen zeigt sich die oben genannten Aktivitätssteigerungen jeweils am Tag 1, 2, 7 und 28 in Bezug auf die jeweilige Referenzmischung.

In der nachfolgenden Tabelle 13 sind Mischungen von aktivierten Bindemittelsystemen jeweils ohne Zement angeführt.

Diese Mischungen sind auf Massenbasis erstellt und dadurch ergeben sich unterschiedliche Gesamtmassen.

Zusätzlich ist das Water/Binder Ratio, welche den Wasseranteil zum Feststoff angibt, angeführt.

**Tabelle 13**

| | | **Mischung (g)** | | | | |
|---|---|---|---|---|---|---|
| **Aktiviertes Bindemittelsystem** | **Wa-ter/Binde r Ratio** | **Konverterschlacke** | **Tuff** | | | |
| Geolpoly- mer Mi- schung 1 | 0,45 | 0 | 0 | CEM I 100 | | |
| Geolpoly-mer Mischung 2 | 0,35 | 93,5 | 0 | Natrium-carbonat 2,2 | Natrium-aluminat 11 | Natrium-metasilicat 3,3 |
| Geolpolymer Mischung 3 | 0,33 | 99 | 0 | Natriumhydroxid 11 | | |
| Geolpolymer Mischung 4 | 0,35 | 47,85 | 47,85 | Natriumcarbonat 7,7 | Natriumaluminat 6,6 | |
| Geolpolymer Mischung 5 | 0,30 | 46,75 | 46,75 | Calciumoxid 16,5 | | |
| Geolpolymer Mischung 6 | 0,47 | 0 | 96,8 | Natriumcarbonat 12,1 | Natriumaluminat 1,1 | |
| Geolpolymer Mischung 7 | 0,45 | 0 | 85,8 | Calciumoxid 24,2 | | |
| Geolpolymer Mischung 8 | 0,35 | 0 | 100,1 | Natriumcarbonat 9,9 | | |
| Geolpolymer Mischung 9 | 0,43 | 0 | 88 | Calciumoxid 22 | | |
| Geolpolymer Mischung 10 | 0,56 | 0 | 0 | Asche 97,9 | Natriumhydroxid 12,1 | |
| Geolpolymer Mischung 11 | 0,49 | 0 | 0 | Asche 89,1 | Calciumoxid 20,9 | |
| Geolpolymer Mischung 12 | 0,30 | 0 | 0 | Quarzsand 99 | Natriumcarbonat 11 | |
| Geolpolymer Mischung 13 | 0,30 | 0 | 0 | Quarzsand 97,9 | Natriummetasilicat 12,1 | |
| Geolpolymer Mischung 14 | 0,30 | 0 | 0 | Quarzsand 99 | Natriumaluminat 11 | |
| Geolpolymer Mischung 15 | 0,33 | 0 | 0 | Quarzsand 93,5 | Calciumoxid 16,5 | |
| Geolpolymer Mischung 16 | 0,35 | 100 | 0 | Natriummetasilicat 11,11 | | |
| Geolpolymer Mischung 17 | 0,35 | 100 | 0 | Bassanit 11,11 | | |
| Geolpolymer Mi-schung 18 | 0,35 | 100 | 0 | Natriummetasilicat 5,5 | Bassanit 5,5 | |
| Geolpolymer Mischung 19 | 0,556 | 0 | 100 | | | |
| Geolpolymer Mischung 20 | 0,544 | 0 | 100 | | | |
| Geolpolymer Mischung 21 | 0,35 | 50 | 50 | Natriummetasilicat 11,11 | | |
| Geolpolymer Mischung 22 | 0,35 | 50 | 50 | Bassanit 11,11 | | |
| Geolpolymer Mischung 23 | 0,406 | 50 | 50 | Natriummetasilicat 5,5 | Bassanit 5,5 | |
| Geolpolymer Mischung 24 | 0,531 | 0 | 100 | Natriummetasilicat 5,5 | Bassanit 5,5 | |

Tabelle 14 zeigt die Aktivität der Geopolymer Mischungen 1 bis 24 in Bezug auf die Frühfestigkeit von Beton unter Verwendung des erfindungsgemäßen aktivierten Materials am Tag 1, 2, 7, 14 und 28.

Als Referenz dient die Festigkeit von CEM I, welche unter Geopolymer Mischung 1 angeführt ist.

**Tabelle 14**

| | **Aktivität in %** | | | | |
|---|---|---|---|---|---|
| **Aktiviertes Bindemittelsystem** | **1** | **2** | **7** | **14** | **28** |
| Geolpolymer Mischung 1 | 100 | 100 | 100 | 100 | 100 |
| Geolpolymer Mischung 2 | NA | NA | 14,3 | NA | 18,8 |
| Geolpolymer Mischung 3 | NA | NA | 0 | 6,5 | 9,9 |
| Geolpolymer Mischung 4 | NA | NA | 31,3 | NA | 39,7 |
| Geolpolymer Mischung 5 | NA | NA | 6,8 | NA | 11,1 |
| Geolpolymer Mischung 6 | NA | NA | NA | NA | 5,1 |
| Geolpolymer Mischung 7 | NA | NA | 6,2 | NA | 11,3 |
| Geolpolymer Mischung 8 | NA | NA | 0 | NA | 0 |
| Geolpolymer Mischung 9 | NA | NA | 10,2 | NA | 18,9 |
| Geolpolymer Mischung 10 | NA | NA | 0 | NA | 0 |
| Geolpolymer Mischung 11 | NA | NA | 27,4 | NA | 17,6 |
| Geolpolymer Mischung 12 | NA | NA | 0 | NA | 0 |
| Geolpolymer Mischung 13 | NA | NA | 0 | NA | 0 |
| Geolpolymer Mischung 14 | NA | NA | 0 | NA | 0 |
| Geolpolymer Mischung 15 | NA | NA | 5,8 | NA | 7,7 |
| Geolpolymer Mischung 16 | NA | 4,2 | 26,4 | NA | 37,8 |
| Geolpolymer Mischung 17 | 2 | 7 | 21,1 | NA | 26 |
| Geolpolymer Mischung 18 | 18,1 | 14,2 | 23,6 | NA | 33,6 |
| Geolpolymer Mischung 19 | 1,6 | 1,8 | 3,9 | NA | NA |
| Geolpolymer Mischung 20 | 1,2 | 2,3 | 4,7 | NA | 3,5 |
| Geolpolymer Mischung 21 | 1,2 | 1,8 | 1,2 | NA | 8 |
| Geolpolymer Mischung 22 | 4 | 6,4 | 19,1 | NA | 25,8 |
| Geolpolymer Mischung 23 | 3,7 | 5,4 | 11,6 | NA | 22,4 |
| Geolpolymer Mischung 24 | 0,8 | 0,8 | 1 | NA | NA |

Die untersuchten Mischungen zeigen, dass sowohl die einzelnen Komponenten als auch Mischungen aus Schlacken, Aschen und Tuffen mittels geeigneter Aktivatoren aktivierbar sind. Dabei zeigt sich, dass sich abhängig von der verwendeten Wassermenge (Water/Binder ratio) Festigkeitszunahmen zumindest ab 7 Tagen feststellbar sind.

Erhöhte Frühfestigkeiten bei 1 Tag lassen sich wiederum durch Aktivatormischungen aus Alkalisilikaten, insbesondere Natriummetasilicat und Erdalkalisulfatträgern, insbesondere Bassanit erzielen.

Die Untersuchungen mit Quarzsand, welche keinerlei Festigkeitsentwicklung bis 28 Tage zeigen, belegen, dass eine Aktivierung der Mischungen als Ursache der Festigkeitszunahmen zu werten ist und nicht etwa eine Verfestigung der eingesetzten Aktivatoren oder ähnlichen Phänomene. Die für Geopolymere beschreiben Reaktionen der Festigkeitsentwicklung sind ebenso für die beschriebenen Mischungen anzunehmen.

Bevorzugenswerte Aktivatoren sind dabei Natriumcarbonat, Natriumaluminat und Natriummetasilicat sowie der Erdalkalisulfatträger Bassanit.

Hervorzuheben sind die Aktivitätsverläufe der Mischungen 11, 16, 17, 18, 22 und 23, welche eine Einsatzfähigkeit als Geopolymer zeigen.

Erfindungsgemäße Polymermischungen sind die Geopolymermischungen 18, 23 und 24.

Die Geopolymermischung 11 umfasst nur Asche und einen alkalischen Aktivator. Geopolymermischungen 16 und 17 umfassen nur Konverterschlacke und einen Erdalkalisulfatträger bzw. alkalischen Aktivator. Die einzelnen Mischungen zeigen daher, dass alle verwendeten Bestandteile einzeln aktivierbar sind.

Die Geopolymermischung 22, welche Konverterschlacke und Tuff in einem Verhältnis von 1:1, einen Erdalkalisulfatträger, aber keinen Aktivator enthält, zeigt ebenfalls gute Aktivitätssteigerungswerte, da die latent-hydraulischen Anteile der Schlacke in dieser Konstellation eine starke Aktivierung zeigen.

Die Geopolymermischung 24 beinhaltet keine Konverterschlacke als Additiv, sowie stark erhöhte Wasser zu Bindemittel Verhältnisse, woraus die niedrigen Aktivitätswerte folgen können.

Die erfindungsgemäßen Beispiele zeigen, dass durch die Auswahl der Zusammensetzung der Mischungen für das aktivierte Bindemittelsystem sowohl eine hohe Frühfestigkeit als auch nach 28 Tagen eine hohe Festigkeit im Vergleich zu den Werten der jeweiligen Referenz(mischung) erzielt wird.

Die Ausführungsbeispiele zeigen bzw. beschreiben mögliche Ausführungsvarianten des aktivierten Materials und des Betonsystems, wobei an dieser Stelle bemerkt sei, dass auch Kombinationen der einzelnen Ausführungsvarianten untereinander möglich sind.

## Patentansprüche

1. Aktiviertes Bindemittelsystem für Baustoffe umfassend zumindest ein Additiv und zumindest einen Aktivator, **dadurch gekennzeichnet, dass** im aktivierten Bindemittelsystem zumindest ein Erdalkalisulfatträger, insbesondere zumindest ein Calciumsulfatträger, enthalten ist.

2. Aktiviertes Bindemittelsystem nach Anspruch 1, **dadurch gekennzeichnet, dass** das Additiv zumindest ein puzzolanischer und/oder latent-hydraulischer Zusatzstoff ist.

3. Aktiviertes Bindemittelsystem nach Anspruch 2, **dadurch gekennzeichnet, dass** das puzzolanische Additiv ausgewählt aus einer Gruppe umfassend Asche, Ziegel, Perlit, Zeolith, calcinierte Tone, Glas, Tuffe, Tuffite, und/oder Trass oder eine Mischung daraus gebildet ist.

4. Aktiviertes Bindemittelsystem nach Anspruch 2, **dadurch gekennzeichnet, dass** das latent-hydraulische Additiv ausgewählt aus einer Gruppe umfassend Baurestmassen und Schlacken oder eine Mischung daraus gebildet ist, wobei als Schlacke Hochofenschlacke, Stahlwerkschlacke und/oder Metallhüttenschlacken, und als Stahlwerkschlacke Konverterschlacke und/oder Elektroofenschlacke enthalten ist.

5. Aktiviertes Bindemittelsystem nach zumindest einem der Ansprüche 1 bis 4, **dadurch gekennzeichnet, dass** der zumindest eine Aktivator ausgewählt aus einer Gruppe umfassend alkalische Aktivatoren, Massengrundstoffe, Zement und/oder Zementklinker, nicht alkalische Aktivatoren, oder eine Mischungen daraus gebildet ist, wobei der zumindest eine alkalische Aktivator ausgewählt aus einer Gruppe umfassend Natriumhydroxid, Natriummetasilicat, Natriumcarbonat, Natriumaluminat, Kaliumcarbonat, Kaliumsulfat, Natriumsulfat, Kaliumhydroxid, Calciumoxid, Calciumhydroxid, Magnesiumoxid, Alkalisilikate oder eine Mischungen daraus gebildet ist.

6. Aktiviertes Bindemittelsystem nach zumindest einem der Ansprüche 1 bis 5, **dadurch gekennzeichnet, dass** der zumindest eine alkalische Aktivator in einer Menge von kleiner 15 Masse%, vorzugsweise kleiner 10 Masse%, insbesondere kleiner 5 Masse% enthalten ist.

7. Aktiviertes Bindemittelsystem nach Anspruch 5, **dadurch gekennzeichnet, dass** der zumindest eine Massengrundstoff ausgewählt aus einer Gruppe umfassend Rotschlamm, Glas, insbesondere Glasscherben, Maisstängelasche, Maiskolbenasche oder eine Mischung daraus gebildet ist.

8. Aktiviertes Bindemittelsystem nach Anspruch 5, **dadurch gekennzeichnet, dass** der zumindest eine nicht alkalische Aktivator ausgewählt aus einer Gruppe umfassend Phosphorsäure, Aluminium Ätzlösungen, Bayer-Lösungen aus der Aluminiumherstellung, Aluminiummetaphosphate, Natriumphosphate, Natriumtrimetaphosphat-Hydrate, Natriumpolyphosphate, Natriumhydrogenphosphat, Sodalith, Natriumhexafluorosilikat, Tetramethylsilan, Kaliumpyrophosphat, Alkalihexafluorosilikate oder eine Mischung daraus gebildet ist.

9. Aktiviertes Bindemittelsystem nach zumindest einem der Ansprüche 1 bis 8, **dadurch gekennzeichnet, dass** zumindest ein fein vermahlenes Material ausgewählt aus einer Gruppe umfassend Kalkstein, Dolomit, Karbonate, Silikate, Aluminiumoxid (Al2O3), Vaterit oder eine Mischung daraus enthalten ist.

10. Aktiviertes Bindemittelsystem nach zumindest einem der Ansprüche 1 bis 9, **dadurch gekennzeichnet, dass** der zumindest eine Aktivator in einem festen Aggregatszustand enthalten ist.

11. Aktiviertes Bindemittelsystem nach zumindest einem der Ansprüche 1 bis 10, **dadurch gekennzeichnet, dass** der zumindest eine Calciumsulfatträger ausgewählt aus einer Gruppe umfassend Anhydrit, Bassanit und/oder Gips oder eine Mischung daraus gebildet ist.

12. Aktiviertes Bindemittelsystem nach zumindest einem der Ansprüche 1 bis 11, **dadurch gekennzeichnet, dass** das aktivierte Bindemittelsystem als Fertigmischung vorliegt.

13. Aktiviertes Bindemittelsystem nach zumindest einem der Ansprüche 1 bis 13, **dadurch gekennzeichnet, dass** es 40 Masse% bis 98 Masse% zumindest eines Additivs, 1 Masse% bis etwa 60 Masse% zumindest eines Erdalkalisulfatträgers und 0,1 Masse% bis etwa 15 Masse% zumindest eines Aktivators, insbesondere alkalisch aktivierten Aktivators, umfasst.

14. Verfahren zur Herstellung eines aktivierten Bindemittelsystems nach einem der Ansprüche 1 bis 13, **dadurch gekennzeichnet, dass** das zumindest eine Additiv, der zumindest eine Erdalkalisulfatträger und zumindest eine Aktivator vermengt werden, wobei die Bestandteile des aktivierten Bindemittelsystems entweder einzeln oder gemeinsam konditioniert, gebrochen, gesiebt, getrocknet, gemahlen, homogenisiert, und gegebenenfalls nochmals gemischt und/oder gekühlt werden.

15. Betonsystem umfassend Wasser, zumindest einen Zuschlagstoff und zumindest ein Bindemittel, **dadurch gekennzeichnet, dass** das zumindest eine Bindemittel teilweise oder gänzlich durch ein aktiviertes Bindemittelsystem nach einem der Ansprüche 1 bis 13 ersetzt ist.
